## Europäisches Patentamt
## European Patent Office
## Office européen des brevets

(19)

(11) Veröffentlichungsnummer: **0 040 455**
**B1**

(12) **EUROPÄISCHE PATENTSCHRIFT**

(45) Veröffentlichungstag der Patentschrift:
**21.08.85**

(51) Int. Cl.⁴: **A 22 B 5/08**

(21) Anmeldenummer: **81200528.8**

(22) Anmeldetag: **15.05.81**

(54) **Verfahren und Vorrichtung zum Enthaaren von Schlachtvieh, insbesondere von Schweinen.**

(30) Priorität: **16.05.80 NL 8002849**

(43) Veröffentlichungstag der Anmeldung:
**25.11.81 Patentblatt 81/47**

(45) Bekanntmachung des Hinweises auf die Patenterteilung:
**21.08.85 Patentblatt 85/34**

(84) Benannte Vertragsstaaten:
**AT BE CH DE FR GB IT LI LU NL SE**

(56) Entgegenhaltungen:
**BE - A - 533 548**
**BE - A - 660 753**
**CH - A - 532 899**
**DE - A - 1 632 090**
**DE - A - 2 723 662**
**FR - A - 737 569**
**FR - A - 1 345 668**

(73) Patentinhaber: **MACHINEFABRIEK G.J. NIJHUIS B.V.,
Parallelweg 4, NL-7102 DE Winterswijk (NL)**

(72) Erfinder: **Abele, Günter, Daimlerstrasse 6, D-7091 Neuler
(DE)**

(74) Vertreter: **van der Beek, George Frans et al,
Nederlandsch Octroolbureau Johan de Wittlaan 15 P.O.
Box 29720, NL-2502 LS 's-Gravenhage (NL)**

## Beschreibung

Die Erfindung betrifft ein Verfahren zum Enthaaren von Schlachtvieh, insbesondere von Schweinen, bei dem der getötete und verblutete Körper zuerst gebrüht wird, anschließend unter gleichzeitiger Drehung um die Längsachse mittels schlagender und kratzender Werkzeuge grob enthaart wird und nach Vollendung der Grobenthaarung unter Fortführung der Enthaarung und der Drehung des Körpers einer Feinenthaarung mittels eines Flammenstrahles unterworfen wird, womit während mehrerer Umdrehungen des Körpers die gesamte Länge des Körpers behandelt wird.

Ein derartiges Verfahren ist aus der DE-A-2 047 323 bekannt. Bei diesem bekannten Verfahren werden die mit den Schlagwerkzeugen grob enthaarten Körper im Endbereich der Grobenthaarung bzw. anschließend an die Großenthaarung über die gesamte Länge des Körpers abgeflammt, damit die von den Schlagwerkzeugen nicht erfaßbaren feinen Haare entfernt werden. Die schlagenden und kratzenden Werkzeuge ziehen die langen Haare aus der Haut, so daß im wesentlichen nur die feinen Haare übrigbleiben, welche mittels der Abflammung zu entfernen sind. Bei diesem bekannten Verfahren findet das Abflammen mit einer Flamme statt, welche über die gesamte Länge des Körpers die gleiche Intensität hat. Lange Haare, welche noch nicht von den Schlagwerkzeugen erfaßt sind, werden dann zwar von der Flamme eingekürzt, sind dann aber nicht mehr von den Schlagwerkzeugen erfaßbar und behindern die Feinenthaarung. Eine Flamme, welche über die Gesamtlänge die gleiche Intensität hat, ist bezüglich seiner Intensität auf die schwierigen Bereiche des Tierkörpers abzustimmen und das sind die Kopfpartie sowie die Hinterpartie. Die Temperatur einer derartigen Flamme ist dann jedoch für den mittleren Bereich zu hoch und dies führt zu Überhitzung der Haut.

Zweck der Erfindung ist jetzt ein Verfahren sowie mehrere Vorrichtungen zu schaffen, womit es möglich ist, eine vollständige Grob- und Feinenthaarung unter gleichzeitiger Schonung der Haut zu erhalten.

Dieser Zweck wird erfindungsgemäß dadurch erreicht, daß der Flammenstrahl bzw. die Flammenstrahlen in den Endbereichen des Körpers auf dem Körper mit einer größeren Zeitdauer und/oder Intensität als im mittleren Bereich einwirkt bzw. einwirken.

Die Erfindung geht also von dem an sich aus der DE-A-2 047 323 (die Offenlegungsschrift) bekannten Gedanken aus, daß der Körper vollständig mit Hilfe von den mechanischen Schlag- und Kratzwerkzeugen grobenthaart werden soll, wonach dann anschließend die Feinenthaarung mit einer Flammenfront stattfindet, welche durch Steuerung von Zeiteinwirkungsdauer und/oder Intensität an die jeweiligen Körperverhältnisse angepaßt ist.

Eine erste Vorrichtung zur Durchführung des erfindungsgemäßen Verfahrens kann dadurch gekennzeichnet sein, daß ein einziger Brenner in der Mitte der Länge des Rostes schwenkbar um eine waagerechte Querachse mit einem Schwenkbereich seiner Flamme angeordnet ist, welche die Gesamtlänge des Rostes erfaßt. Der hin und her schwenkende Brenner wird bei kontinuierlicher Bewegungsgeschwindigkeit über den Körper hin und her bewegt und wird bei gleichbleibender Flammintensität an den Umkehrstellen seiner Schwenkbewegung, welche in den Endbereichen der Vorrichtung liegen, durch die dann notwendige Verzögerung und anschließende Beschleunigung der Bewegung an diesen Stellen als im mittleren Bereich etwas länger auf den Körper einwirken.

Ähnliches kann man mit einer Vorrichtung erreichen, welche erfindungsgemäß dadurch gekennzeichnet ist, daß ein einziger Brenner oberhalb des Rostes hin und her längs einer parallel zur Längsrichtung des Rostes verlaufenden Bahn bewegbar ist. Die Umkehrung in den Endbereichen der Führungsbahn sorgt dann für eine etwas stärkere Einwirkung.

Man kann auch mit einer fest angeordneten Reihe von Brennern arbeiten, so wie diese an sich aus der DE-A-2 047 323 bekannt sind, wobei man dann jedoch erfindungsgemäß Mittel für das mittels einer Zeituhr mit unterschiedlicher Zeitdauer Ein- und Ausschalten der Brenner der Endbereiche der Vorrichtung bzw. der Brenner des mittleren Bereiches der Vorrichtung vorsieht. Mit einer derartigen Vorrichtung ist es möglich, daß zuerst die Brenner der Endbereiche eingeschaltet werden, etwas später die Brenner des mittleren Bereiches und sämtliche Brenner zu gleicher Zeit ausgeschaltet werden. Dies ist dann eine einfache Änderung der Einwirkungsdauer an den Bereichen des Tierkörpers angepaßt.

Bei Verwendung einer fest angeordneten Reihe von Brennern ist es erfindungsgemäß jedoch auch möglich, daß die Brenner der Brennerreihe in Gruppen unterteilt sind und die Brenner der Endbereiche der Vorrichtung eine größere Flammenstärke als die Brenner der mittleren Gruppe der Brenner besitzen. Die Brenner können dann zu gleicher Zeit ein- und ausgeschaltet werden, wie dies an sich bekannt ist, arbeiten jedoch mit unterschiedlicher Stärke, ebenfalls an den Bereichen des Tierkörpers angepaßt.

Statt des eher genannten einzigen Brenners schwenkbar um eine waagerechte Querachse anzuordnen, ist es erfindungsgemäß auch möglich, daß sich oberhalb des Rostes zwei Brenner befinden, welche gleichmäßig verteilt über die Länge der Vorrichtung um waagerechte Querachsen schwenkbar angeordnet sind, und Mittel vorgesehen sind, welche die Schwenkbewegung derart steuern, daß die Flammen dieser Brenner in den Endbereichen länger als im mittleren Bereich der Vorrichtung verweilen. Die Verlängerung der Einwirkungszeit in den Umkehrbereichen des Schwenkbereiches ist im mittleren Bereich nicht erwünscht, weshalb dort gerade die Umkehrung schneller als in den Endbereichen der Vorrichtung stattzufinden hat. Vorzugsweise werden die Brenner dabei derart synchron bewegt, daß ihre Flammen parallel zueinander bleiben, so daß sie sich im mittleren Bereich des Tierkörpers nicht verstärken.

Es sei bemerkt, daß aus der DE-A-1 632 090 eine Sengvorrichtung bekannt ist, wobei der zu enthaarende Tierkörper in senkrechter Richtung hängend an einer Transportvorrichtung zwischen Brennern vorbeigeführt wird, welche in drei in der Fortbewegungsrichtung aufeinander folgenden Behandlungsgruppen unterteilt sind. Diese Brennergruppen befinden sich auf beiden Seiten der Bewegungsbahn und die unteren Brenner, welche für die Behandlung der Kopfpartie dienen, bewegen sich dabei gleichzeitig einmal auf und einmal ab mit einer kurzen Verweilzeit an der Umkehrstelle. Für die Hinterpartie sind fest angeordnete Brenner vorgesehen, während für die mittlere Partie auf beiden Seiten auf und ab bewegbare Brenner vorgesehen sind, welche sich in entgegengesetzte Richtung bewegen. Bei diesem bekannten Verfahren und Vorrichtung werden die Brenner beim Auf- und Abbewegen an den Umkehrstellen natürlich ebenfalls länger einwirken.

Es handelt sich jedoch dabei um ein Verfahren, welches prinzipiell anders als das Verfahren ist, welches der Erfindung zugrunde liegt. Die Brenner dienen bei diesem bekannten Verfahren bzw. Vorrichtung dazu, um sämtliche Haare endgültig zu entfernen und sie bilden das einzige Mittel für die Entfernung der Haare. Dazu müssen die kontinuierlich arbeitenden Brenner eine sehr hohe Temperatur haben und weil sie sich auf beiden Seiten der Bewegungsbahn des ruhigen, d. h. des sich nicht drehenden, Körpers befinden, müssen die Flammen eine derartige Intensität haben, daß sie auch die weiter von den Brennern entfernten Teile des Körpers vollständig absengen. Dies hat aber zwangsläufig Überhitzung derjenigen Teile des Tierkörpers zufolge, welche nahe an den Brennern vorbeibewegen, eine Überhitzung, welche in dieser Veröffentlichung genannt wird, jedoch als nicht von Bedeutung betrachtet wird. Bei dieser Sachlage ist unwichtig, ob an den Umkehrstellen die sowieso vorhandene Überhitzung stärker vorhanden ist oder nicht.

Erfindungsgemäß soll jedoch gerade Überhitzung der durch die schlagende und kratzende Enthaarung des gebrühten Körpers viel empfindlicheren Haut vermieden werden.

Die Erfindung soll im folgenden der Zeichnungen näher erläutert werden.

Fig. 1 zeigt schematisch in Vorderansicht eine erste Ausführungsform der erfindungsgemäßen Vorrichtung.

Fig. 2 ist schematisch eine Seitenansicht der Vorrichtung nach Fig. 1.

Fig. 3 zeigt ebenfalls schematisch in Vorderansicht eine andere Ausführungsform und

Fig. 4 schematisch eine Seitenansicht der Vorrichtung nach Fig. 3.

Fig. 5 zeigt schematisch in Vorderansicht eine andere Ausführungsform.

Fig. 6 und 7 zeigen in Vorderansicht Ausführungsformen mit fest angeordneten Brennern.

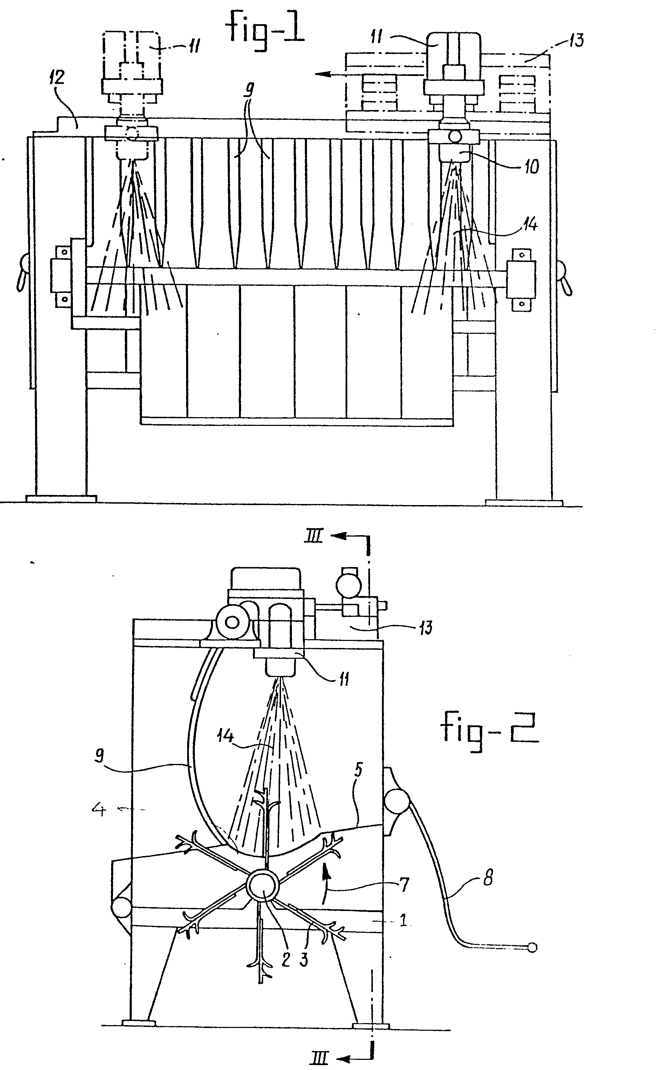

Die in den Fig. 1 und 2 gezeigte Vorrichtung besteht aus einem Rahmen 1, worin eine Welle 2 mit elastischen Schlag- und Kratzwerkzeugen 3 gelagert ist. Der Rahmen hat einen aus Stäben bestehenden Rost 5, welcher im mittleren Teil bei 4 etwas nach unten zur Bildung einer Mulde durchgebogen ist, worin der Körper eines Schweines angeordnet werden kann.

Die Werkzeuge 3 können sich zwischen den Roststäben hindurchbewegen, wenn in Richtung des Pfeiles 7 gedreht wird. Ein zweiter Rost 9 mit gebogenen Stäben verläuft vom Rost 5 nach oben derart, daß die Schlagorgane 3 während deren Umdrehung den auf den Stäben 5 und gegen die Stäbe 9 liegenden Körper umdrehen. Dies ist an sich bekannt und mehr im einzelnen gezeigt in z. B. der deutschen Patentschrift 2 047 323. Mit 8 ist noch ein Rost angedeutet worden, womit der Körper in die Vorrichtung hineingebracht werden kann. Der Rahmen 1 ist außerdem mit einer Schiene 12 versehen, worauf ein Brenner 11 mit Flammdüse 10 bewegbar angeordnet ist. Das Hinundherbewegen kann mit Hilfe des Elektromotors 13 stattfinden, welcher den Brenner 11 z. B. mit Hilfe einer Kette oder einer Schraubenspindel antreibt. Die Flamme 14 ist nach unten gerichtet. Bewegt sich der Brenner 10, 11 mit gleichbleibender Geschwindigkeit hin und her, so wird schon durch die Verzögerung und Beschleunigung während der Umkehrung der Bewegung an den Enden der Schiene 12 die Einwirkung der Flamme dort länger dauern.

Fig. 1 zeigt den Brenner in der Nähe seiner beiden Endlagen.

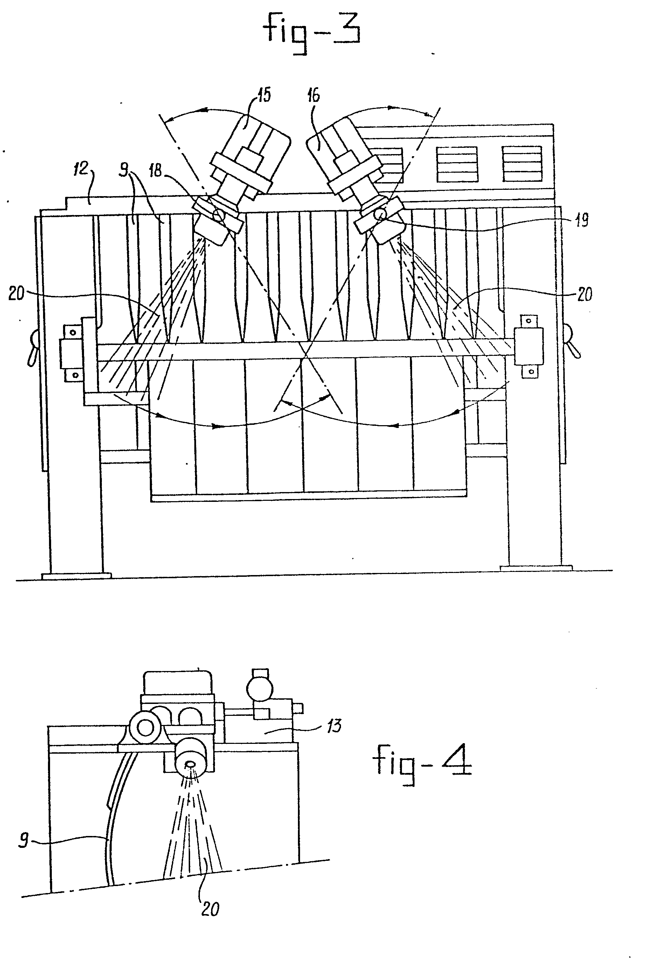

Bei den Ausführungsformen der Fig. 3 und 4 sind zwei Brenner 15 und 16 auf Querachsen 18 und 19 schwenkbar gelagert. Die mit 20 angedeuteten Flammen bilden den mit den Brennern 15 und 16 in Fig. 3 angedeuteten Schwenkbereich und können derart gesteuert werden, daß sie in den gezeichneten Endlagen eine längere Einwirkungsdauer als in der anderen nicht gezeichneten Endlage zustande bringen. Statt entgegengesetzter Schwenkbewegungen können sich die Brenner auch synchron bewegen, so daß die Flammen immer parallel zueinander gerichtet sind. Dadurch vermeidet man, daß im mittleren Bereich die Flammen der beiden Brenner sich überlappen.

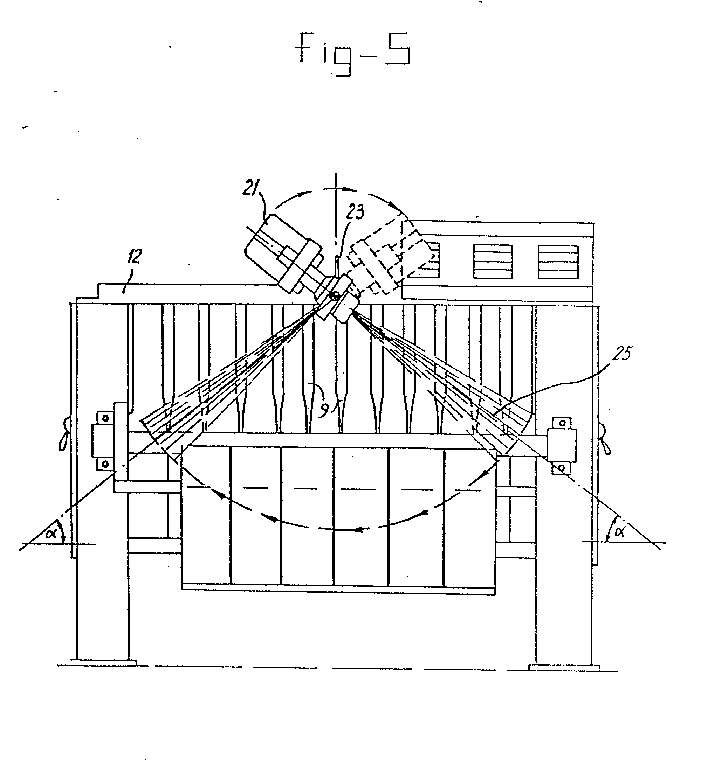

Fig. 5 zeigt eine Ausführungsform mit nur einem einzigen Brenner 21, welcher schwenkbar um eine zentral angeordnete Achse 23 ist. Dieser Brenner kann derart gesteuert werden, daß die Flammen 25, welche an den Umlenkstellen der Schwenkbewegung die größten Entfernungskörper besitzen in diesen Endlagen länger als im mittleren Bereich verbleiben, insbesondere diesen mittleren Bereich schneller durchlaufen. Eine derartige Bewegung ist mit bekannten Mitteln sowie Nocken bzw. Exzenter leicht zu erreichen.

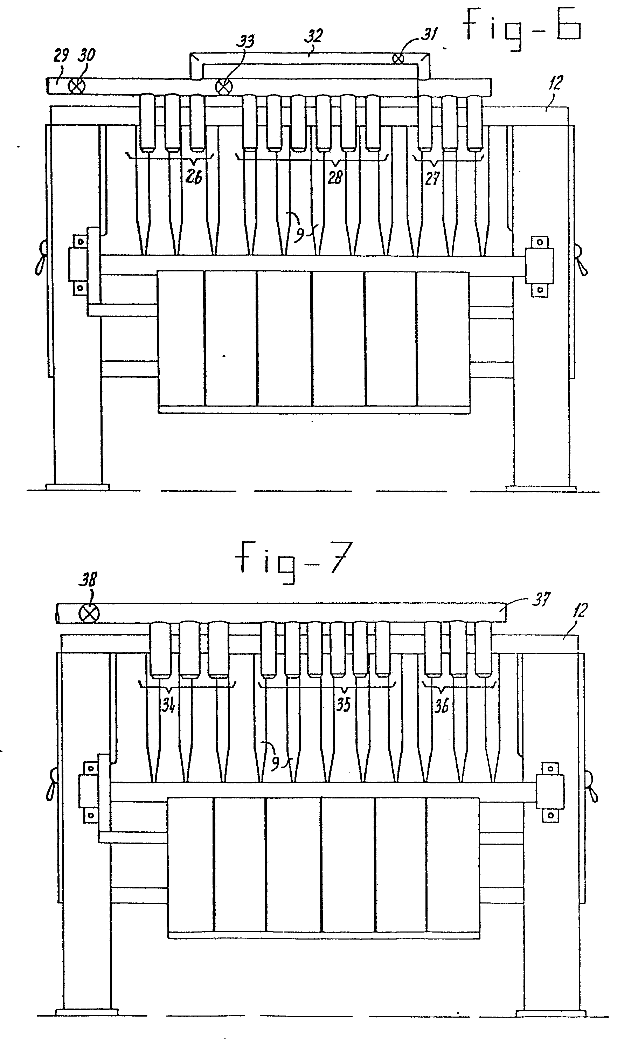

Bei der Vorrichtung nach Fig. 6 ist eine Reihe von feststehenden Brennern bestehend aus einer ersten Gruppe 26, einer zweiten Gruppe 27 und einer dritten Gruppe 28 vorgesehen. Sämtliche Brenner sind auf eine Gasleitung 29 mit einem Hauptventil 30, einem Ventil 31 in den Leitungszweig 32, welche die mittlere Gruppe von Brennern 28 überbrückt, und einem Ventil 33 angeschlossen. Sämtliche Ventile können mit Hilfe an sich bekannter Zeitsteuermechanismen derart gesteuert werden, daß zuerst das Ventil 30 öffnet, so daß die Brenner 26 in Tätigkeit treten, anschließend das Ventil 31, welches die Brenner 27 im Betrieb setzt, und danach das Ventil 33 für die Brenner 28. Danach können sämtliche Ventile zu gleicher Zeit geschlossen werden.

Schließen mit Phasenunterschied ist natürlich auch möglich.

Fig. 7 zeigt eine Variante der Ausführungsform nach Fig. 6 bestehend aus drei Gruppen von Brennern 34, 35 und 36, welche sämtlich auf die gleiche Gasleitung 37 mit Ventil 38 angeschlossen sind. Die Brenner 35 haben die kleinste Auslaßöffnung, diejenigen der Gruppe 36 sind etwas größer und diejenigen der Gruppe 34 sind am größten. Hiermit ist also eine Anpassung der Flammenintensität an die örtlichen Verhältnisse möglich.

Beim Enthaaren von Schlachtvieh, insbesondere von Schweinen, in einer Schlachtlinie hat man im allgemeinen mit Tieren zu tun, deren Abmessungen nicht wesentlich verschieden sind. Haut- und Behaarungsverhältnisse sind im Grunde genommen auch vergleichbar.

Weil es Schlachtlinien gibt, welche 500 bis 1000 Schweine pro Stunde zu verarbeiten haben und also auch enthaaren sollten, wird es klar sein, daß mit derartig großen Produktionsziffern und die sehr kurze Verbleibezeit eines Körpers in der Enthaarungsmaschine, das kontinuierlich Aufrechterhalten von festen Werten für die Art der Feinenthaarung durch Abflammung von außerordentlich großer Bedeutung ist. Dies ist mit dem erfindungsgemäßen Verfahren und Vorrichtung zum ersten Mal vollständig erreichbar unter Vermeidung, daß die Qualität des Fleisches stellenweise niedriger wird.

**Patentansprüche**

1. Verfahren zum Enthaaren von Schlachtvieh, insbesondere von Schweinen, bei dem der getötete und verblutete Körper zuerst gebrüht wird, anschließend unter gleichzeitiger Drehung um die Längsachse mittels schlagender und kratzender Werkzeuge (3) grob enthaart wird und nach Vollendung der Grobenthaarung unter Fortführung der Enthaarung und der Drehung des Körpers einer Feinenthaarung mittels eines Flammenstrahles (14, 20, 25) unterworfen wird, womit während mehrerer Umdrehungen des Körpers die gesamte Länge des Körpers behandelt wird, dadurch gekennzeichnet, daß der Flammenstrahl (14, 20, 25) bzw. die Flammenstrahlen in den Endbereichen des Körpers auf dem Körper mit einer größeren Zeitdauer und/oder Intensität als im mittleren Bereich einwirkt bzw. einwirken.

2. Vorrichtung zur Durchführung des Verfahrens nach Anspruch 1, bestehend aus einem Rost (9) für die Aufnahme eines Tierkörpers, einer antreibbaren Welle (2) unterhalb des Rostes (9) mit Schlagwerkzeugen (3), welche zwischen den Stäben des Rostes (9) hindurchragen und mit oberhalb des Rostes (9) angeordneten Brennern (21), welche auf den Rost (9) gerichtet sind, dadurch gekennzeichnet, daß ein einziger Brenner (21) in der Mitte der Länge des Rostes um eine waagerechte Querachse (23) schwenkbar angeordnet ist, wobei der Schwenkbereich seiner Flamme (25) die Gesamtlänge des Rostes erfaßt.

3. Vorrichtung zur Durchführung des Verfahrens nach Anspruch 1, bestehend aus einem Rost (9) für die Aufnahme eines Tierkörpers, einer antreibbaren Welle (2) unterhalb des Rostes (9) mit Schlagwerkzeugen (3), welche zwischen den Stäben des Rostes (9) hindurchragen und mit oberhalb des Rostes (9) angeordneten Brennern (10), welche auf den Rost (9) gerichtet sind, dadurch gekennzeichnet, daß ein einziger Brenner (10) oberhalb des Rostes (9) längs einer parallel zur Längsrichtung des Rostes (9) verlaufenden Bahn (12) hin und her bewegbar ist.

4. Vorrichtung zur Durchführung des Verfahrens nach Anspruch 1, bestehend aus einem Rost (9) für die Aufnahme eines Tierkörpers, einer antreibbaren Welle (2) unterhalb des Rostes (9) mit Schlagwerkzeugen (3), welche zwischen den Stäben des Rostes (9) hindurchragen, und mit einer oberhalb des Rostes (9) angeordneten Reihe von Brennern (26, 27, 28, 34, 35, 36), welche auf den Rost (9) gerichtet sind, dadurch gekennzeichnet, daß Mittel vorgesehen sind, die mittels einer Zeituhr mit unterschiedlicher Zeitdauer das Ein- und Ausschalten der Brenner (26, 27) der Endbereiche der Vorrichtung bzw. der Brenner (28) des mittleren Bereiches der Vorrichtung bewirken.

5. Vorrichtung zur Durchführung des Verfahrens nach Anspruch 1, bestehend aus einem Rost (9) für die Aufnahme eines Tierkörpers, einer antreibbaren Welle (2) unterhalb des Rostes (9) mit Schlagwerkzeugen (3), welche zwischen den Stäben des Rostes (9) hindurchragen und mit einer oberhalb des Rostes angeordneten Reihe von Brennern (34, 35, 36), welche auf den Rost (9) gerichtet sind, dadurch gekennzeichnet, daß die Brenner der Brennerreihe in Gruppen (34, 35, 36) unterteilt sind und die Brenner (34, 36) der Endbereiche der Vorrichtung eine größere Flammenstärke als die Brenner (35) der mittleren Gruppe der Brenner besitzen.

6. Vorrichtung zur Durchführung des Verfahrens nach Anspruch 1, bestehend aus einem Rost (9) für die Aufnahme eines Tierkörpers, einer antreibbaren Welle (27) unterhalb des Rostes (9) mit Schlagwerkzeugen (3), welche zwischen den Stäben des Rostes (9) hindurchragen und mit oberhalb des Rostes (9) angeordneten Brennern (15, 16), welche auf den Rost (9) gerichtet sind, dadurch gekennzeichnet, daß sich oberhalb des Rostes (9) zwei Brenner (15, 16) befinden, welche gleichmäßig verteilt über die Länge der Vorrichtung um waagerechte Querachsen (18, 19) schwenkbar angeordnet sind und daß Mittel vorgesehen sind, welche die Schwenkbewegung derart steuern, daß die Flammen (20) dieser Brenner in den Endbereichen länger als im mittleren Bereich der Vorrichtung verweilen.

7. Vorrichtung nach Anspruch 6, dadurch gekennzeichnet, daß die Brenner derart synchron bewegbar sind, daß ihre Flammen (20) parallel zueinander bleiben.

## Claims

1. Process for dehairing slaughtered animals, especially pigs, in which the killed and bled body is first scalded, subsequently, whilst at the same time rotating about its longitudinal axis, coarsely dehaired by means of beating and scraping tools (3), and after completion of coarse dehairing, whilst at the same time continuing to be dehaired and rotated, is subjected to fine dehairing by means of a flame jet (14, 20, 25), with which the entire length of the body is treated during several revolutions of the body, characterised in that the flame jet (14, 20, 25) or flame jets acts or act on the body for a longer period of time and/or with greater intensity in the end regions of the body than in the middle region.

2. Apparatus for carrying out the process according to claim 1, consisting of a grid (9) for receiving an animal body and of a drivable shaft (2) underneath the grid (9), with beating tools (3) which project through between the bars of the grid (9), and with burners (21) arranged above the grid (9) and directed onto the grid (9), characterised in that a single burner (21) is arranged in the middle of the length of the grid so as to be pivotable about a horizontal transverse ax's (23), the pivoting range of its flame (25) covering the entire length of the grid.

3. Apparatus for carrying out the process according to claim 1, consisting of a grid (9) for receiving an animal body and of a drivable shaft (2) underneath the grid (9), with beating tools (3) which project through between the bars of the grid (9), and with burners (10) arranged above the grid (9) and directed onto the grid (9), characterised in that a single burner (10) is movable to and fro above the grid (9) along a path (12) extending parallel to the longitudinal direction of the grid (9).

4. Apparatus for carrying out the process according to claim 1, consisting of a grid (9) for receiving an animal body and of a drivable shaft (2) underneath the grid (9), with beating tools (3) which project through between the bars of the grid (9), and with a row of burners (26, 27, 28, 34, 35, 36) arranged above the grid (9) and directed onto the grid (9), characterised in that means are provided to switch on and off the burners (26, 27) of the end regions of the apparatus or the burners (28) of the middle region of the apparatus for different periods of time by means of a time switch.

5. Apparatus for carrying out the process according to claim 1, consisting of a grid (9) for receiving an animal body and of a drivable shaft (2) underneath the grid (9), with beating tools (3) which project through between the bars of the grid (9), and with a row of burners (34, 35, 36) arranged above the grid and directed onto the grid (9), characterised in that the burners of the burner row are subdivided into groups (34, 35, 36), and the burners (34, 36) of the end regions of the apparatus have a greater flame intensity than the burners (35) of the middle group of burners.

6. Apparatus for carrying out the process according to claim 1, consisting of a grid (9) for receiving an animal body and of a drivable shaft (2) underneath the grid (9), with beating tools (3) which project through between the bars of the grid (9), and with burners (15, 16) arranged above the grid (9) and directed onto the grid (9), characterised in that two burners (15, 16) are located above the grid (9) and are arranged distributed uniformly over the length of the apparatus so as to be pivotable about horizontal transverse axes (18, 19), and in that means are provided to control the pivoting movement in such a way that the flames (20) of these burners remain longer in the end regions than in the middle region of the apparatus.

7. Apparatus according to claim 6, characterised in that the burners are synchronously movable in such a way that their flames (20) remain parallel to one another.

## Revendications

1. Procédé pour le raclage d'animaux de boucherie, en particulier de porcs, dans lequel la dépouille abattue et saignée est tout d'abord échaudée, puis débourrée grossièrement au moyen d'instruments (3) percutants et raclants en accomplissant simultanément une rotation autour de l'axe longitudinal pour être ensuite, à l'achèvement du débourrage grossier, soumise à un dépilage fin à l'aide d'une projection de flammes (14, 20, 25) alors que son débourrage se poursuit et qu'elle continue d'accomplir une rotation, toute la longueur de la dépouille étant traitée lors de plusieurs tours complets de cette dépouille, caractérisé par le fait que la projection de flammes (14, 20, 25) ou, respectivement, les projections de flammes agissent sur la dépouille dans les régions extrêmes de cette dépouille avec une durée et/ou une intensité plus grandes que dans la région centrale.

2. Appareil pour la mise en oeuvre du procédé selon la revendication 1, comprenant une grille (9) pour recevoir une dépouille animale, un arbre (2) pouvant être entraîné, situé au-dessous de la grille (9) et présentant des instruments percutants (3) s'engageant entre les barreaux de la grille (9), ainsi que des brûleurs (21) disposés au-dessus de ladite grille (9) et dirigés vers cette grille (9), caractérisé par le fait qu'un seul et unique brûleur (21) est monté pivotant autour d'un axe transversal horizontal (23) au centre de la longueur de la grille, sa flamme (25) présentant une plage de pivotements qui couvre toute la longueur de ladite grille.

3. Appareil pour la mise en oeuvre de procédé selon la revendication 1, comprenant une grille (9) pour recevoir une dépouille animale, un arbre (2) pouvant être entraîné, situé au-dessous de la grille (9) et présentant des instruments percutants (3) s'engageant entre les barreaux de la grille (9), ainsi que des brûleurs (10) disposés au-dessus de ladite grille (9) et dirigés vers cette grille (9), caractérisé par le fait qu'un seul et unique brûleur (10) peut être animé d'un mouvement alternativ au-dessus de la grille (9), le long d'une trajectoire (12) s'étendant parallèlement à la direction longitudinale de cette grille (9).

4. Appareil pour la mise en oeuvre du procédé selon la revendication 1, comprenant une grille (9) pour recevoir une dépouille animale, un arbre (2) pouvant être entraîné, situé au-dessous de la grille (9) et présentant des instruments percutants (3) s'engageant entre les barreaux de la grille (9), ainsi que, au-dessus de ladite grille (9), une rangée de brûleurs (26, 27, 28, 34, 35, 36) dirigés vers cette grille (9), caractérisé par le fait que sont prévus des moyens qui provoquent l'enclenchement et le déclenchement des brûleurs (26, 27) des régions extrêmes de l'appareil ou bien, respectivement, des brûleurs (28) de la région centrale de cet appareil, à l'aide d'une minuterie à durée d'action différente.

5. Appareil pour la mise en oeuvre du procédé selon la revendication 1, comprenant une grille (9) pour recevoir une dépouille animale, un arbre (2) pouvant être entraîné, situé au-dessous de la grille (9) et présentant des instruments percutants (3) s'engageant entre les barreaux de la grille (9), ainsi que, au-dessus de ladite grille, une rangée de brûleurs (34, 35, 36) dirigés vers cette grille (9), caractérisé par le fait que les brûleurs de ladite rangée sont scindés en des groupes (34, 35, 36), les brûleurs (34, 36) de régions extrêmes de l'appareil possédant une plus grande intensité de flamme que les brûleurs (35) du groupe central de brûleurs.

6. Appareil pour la mise en oeuvre du procédé selon la revendication 1, comprenant une grille (9) pour recevoir une dépouille animale, un arbre (2) pouvant être entraîné, situé au-dessous de la grille (9) et présentant des instruments percutants (3) s'engageant entre les barreaux de la grille (9), ainsi que des brûleurs (15, 16) disposés au-dessus de ladite grille (9) et dirigés vers cette grille (9), caractérisé par le fait que deux brûleurs (15, 16), situés au-dessus de la grille (9), sont montés pivotants autour d'axes transversaux horizontaux (18, 19) en étant uniformément répartis sur la longueur de l'appareil; et par le fait que sont prévus des moyens qui commandent le mouvement pivotant de telle manière que les flammes (20) de ces brûleurs séjournent plus longuement dans les régions extrêmes que dans la région centrale dudit appareil.

7. Appareil selon la revendication 6, caractérisé par le fait que les brûleurs peuvent être mus en synchronisme, de façon que leurs flammes (20) demeurent mutuellement parallèles.

0 040 455

fig-1

fig-2

## fig-3

## fig-4

Fig-5

Fig-6

Fig-7